(19) Europäisches Patentamt / European Patent Office / Office européen des brevets

(11) EP 3 825 361 B1

(12) EUROPEAN PATENT SPECIFICATION

(45) Date of publication and mention of the grant of the patent:
**26.11.2025 Bulletin 2025/48**

(21) Application number: **19838555.1**

(22) Date of filing: **18.07.2019**

(51) International Patent Classification (IPC):
***C08L 83/14*** *(2006.01)* ***C08K 5/00*** *(2006.01)*
***C08G 77/50*** *(2006.01)*

(52) Cooperative Patent Classification (CPC):
(C-Sets available)
**C08L 83/04;** C08G 77/12; C08G 77/20 (Cont.)

(86) International application number:
**PCT/JP2019/028254**

(87) International publication number:
**WO 2020/017586 (23.01.2020 Gazette 2020/04)**

# (54) ORGANOPOLYSILOXANE EMULSION COMPOSITION

ORGANOPOLYSILOXANEMULSIONSZUSAMMENSETZUNG

COMPOSITION D'ÉMULSION À BASE D'ORGANOPOLYSILOXANE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2018 JP 2018136386**

(43) Date of publication of application:
**26.05.2021 Bulletin 2021/21**

(73) Proprietor: **SHIN-ETSU CHEMICAL CO., LTD.**
**Tokyo 100-0004 (JP)**

(72) Inventors:
- **TAWATA, Hanako**
  **Annaka-shi, Gunma 379-0224 (JP)**
- **KOBAYASHI, Akihiro**
  **Annaka-shi, Gunma 379-0224 (JP)**
- **INOKUCHI, Yoshinori**
  **Annaka-shi, Gunma 379-0224 (JP)**

(74) Representative: **V.O.**
**P.O. Box 87930**
**2508 DH Den Haag (NL)**

(56) References cited:
**WO-A1-2016/100840**
**JP-A- 2000 034 205**
**JP-A- 2003 128 926**
**JP-A- 2004 124 083**
**JP-A- H11 246 769**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 825 361 B1

(52) Cooperative Patent Classification (CPC): (Cont.)

C-Sets
**C08L 83/04, C08L 83/00**

**Description**

## TECHNICAL FIELD

The present invention relates to an organopolysiloxane emulsion useful in products such as cosmetics, personal care compositions, home care compositions, release agents, lubricants, coating agents, and fiber treatment agents.

## BACKGROUND ART

There has been a demand for an emulsion of a high-viscosity organosiloxane which emulsion has a small particle size and good stability over time and is useful in products such as cosmetics, personal care compositions, home care compositions, release agents, lubricants, coating agents, and fiber treatment agents. Various methods for preparing a high-viscosity organopolysiloxane emulsion composition have been reported.

For example, when a high-viscosity organopolysiloxane is mechanically emulsified, a size of emulsion particles thus obtained is at least around several microns. It is difficult to attain a particle size less than it, so that such an emulsion becomes less stable with time. Japanese Examined Patent Publication No. Sho 34-2041(Patent Literature 1) and Japanese Examined Patent Publication No. Sho 41-13995 (Patent Literature 2) describe methods for ring-opening polymerization of an emulsified cyclic siloxane oligomer with a strong acid or strong base. These methods give an emulsion having a small particle size. However, the emulsion polymerization of a cyclic siloxane oligomer takes long time requires to require high production costs. In recent years, there has been a demand for a product having a decreased content of octamethylcyclotetrasiloxane. However, the emulsion polymerization of a cyclic siloxane is known to form octamethylcyclotetrasiloxane contained in the emulsion.

Japanese Patent No. 5382273 (Patent Literature 3) describes a method where an organopolysiloxane blocked with a silanol group at both terminals of the molecular chain is emulsified and condensation-polymerized in the presence of an acid catalyst at a temperature lower than 40°C. This method can decrease the amount of octamethylcyclotetrasiloxane contained in the organopolysiloxane, but still a certain amount of octamethylcyclotetrasiloxane is by-produced.

The emulsion polymerization-described in the aforementioned Patent Literature requires an anionic or cationic emulsifying agent to proceed with the polymerization. Further, the emulsifying agent should be anionic to obtain a higher-viscosity organopolysiloxane. When an anionic emulsion is mixed with a cationic emulsion or with an aqueous solution of a cationic emulsifying agent, the emulsion state is destroyed, so that the anionic emulsion may not be mixed with the latter in use and, therefore, has limited use. Further, the anionic emulsifying agent is sometimes avoided in cosmetics because it may cause irritation to the skin.

Japanese Patent No. 3927692 (Patent Literature 4) describes a method where an organopolysiloxane having a hydrosilyl group at both terminals of the molecular chain and an organopolysiloxane having an alkenylsilyl group at both terminals of the molecular chain are emulsified and subjected to addition polymerization. Octamethylcyclotetrasiloxane does not generate as a by-product during this polymerization. Further, the organopolysiloxanes can polymerize even with a nonionic surfactant as the emulsifying agent. However, in the method described in Patent Literature 4, the organopolysiloxane does not sometime have a high viscosity, depending on kinds of raw material siloxane or varying among production lots.

Document WO 2016/100840 A1 (Patent Literature 5) discloses the reaction of a linear, vinyl terminated siloxane and a linear, hydrosilyl terminated siloxane in the presence of surfactants and of a third reactive product having one hydrosilyl end group and one end group having alkoxy functional group.

PRIOR ART LITERATURES

PATENT LITERATURES

Patent Literature 1: Japanese Examined Patent Publication No. Sho 34-2041
Patent Literature 2: Japanese Examined Patent Publication No. Sho 41-13995
Patent Literature 3: Japanese Patent No. 5382273
Patent Literature 4: Japanese Patent No. 3927692
Patent Literature 5: WO 2016/100840 A1

## SUMMARY OF THE INVENTION

## PROBLEMS TO BE SOLVED BY THE INVENTION

The present invention has been made in the aforesaid circumstances. An object of the present invention is to provide an emulsion composition of a high-viscosity organopolysiloxane, which emulsion has a less content of octamethylcyclotetrasiloxane and has a small particle size, and at the same time, has good stability over time.

## MEANS TO SOLVE THE PROBLEMS

As a result of intensive researches to attain the object described above, the present inventors have found that in an addition-polymerization organopolysiloxane composition, almost molecules obtained from an organopolysiloxane having a hydrosilyl group at only both terminals of the molecular chain and an organopolysiloxane having an alkenylsilyl group at only both terminals of the molecular chain have neither hydrosilyl group nor alkenylsilyl group at the terminals. It has also been found that when a starting compound has many functional groups other than a hydrosilyl group and an alkenylsilyl group at the terminal, the addition polymerization is likely to converge so that an intended high viscosity is not obtained.

In other words, it has been found that an addition-polymerized organopolysiloxane of an organopolysiloxane having a hydrosilyl group at both terminals but having a less amount of a functional group other than a hydrosilyl group at both terminals with an organopolysiloxane having an alkenylsilyl group at both terminals and having a less amount of a functional group other than an alkenylsilyl group at both terminals has a high-viscosity and provides an emulsion composition having a small particle size and having good stability over time.

Thus, the present invention provides an emulsion composition comprising

(A) an organopolysiloxane having a viscosity at 25°C of 30,000,000 mPa.s or more and 5,000,000 Pa.s or less, as a value measured with a rotational viscosimeter, as an addition reaction product of a hydrosilyl group of the following component (A-1) with an alkenyl group of the following component (A-2):

(A-1) a linear organopolysiloxane having a hydrosilyl group at both terminals of the molecular chain and no functional group other than a hydrosilyl group at the terminals; or a mixture of said hydrosilyl group-containing linear organopolysiloxane and a linear organopolysiloxane having at least one functional group other than a hydrosilyl group at the terminal and optionally having a hydrosilyl group at the terminal, wherein a percentage of the number of terminal silicon atoms having the functional group other than a hydrosilyl group is less than 5%, based on a total number of terminal silicon atoms of the whole organopolysiloxanes in component (A-1); and

(A-2) a linear organopolysiloxane having an alkenylsilyl group at both terminals of the molecular chain and no functional group other than an alkenylsilyl group at the terminals, or a mixture of said alkenylsilyl group-containing linear organopolysiloxane and a linear organopolysiloxane having at least one functional group other than an alkenylsilyl group at the terminal and optionally having an alkenylsilyl group at the terminal, wherein a percentage of the number of terminal silicon atoms having the functional group other than an alkenylsilyl group is less than 5%, based on a total number of terminal silicon atoms of the whole organopolysiloxanes in component (A-2), wherein a ratio of the number of the alkenylsilyl groups in component (A-2) to the number of the hydrosilyl groups in component (A-1) is 0.5 to 2;

(B) a surfactant in an amount of 0.1 to 12 parts by mass, relative to 100 parts by mass of component (A); and
(C) water in an amount of 10 to 200 parts by mass, relative to 100 parts by mass of component (A).

## EFFECTS OF THE INVENTION

The present invention provides an emulsion composition of a high-viscosity organopolysiloxane, which emulsion has a less content of octamethylcyclotetrasiloxane, a small particle size and good stability over time. The high-viscosity organopolysiloxane emulsion composition is useful as a main component or additive for products such as cosmetics, personal care compositions, home care compositions, release agents, lubricants, coating agents, and fiber treatment agents.

## DETAILED DESCRIPTION OF THE PREFERRED EMBODIMENTS

The present invention will be described below in detail.

Component (A)

Component (A) is an organopolysiloxane as the addition reaction product of a hydrosilyl group of component (A-1) including, as a main component, a linear organopolysiloxane having a hydrosilyl group at both terminals and no functional group other than a hydrosilyl group at the terminal with an alkenylsilyl group of component (A-2) including, as a main component, a linear organopolysiloxane having an alkenylsilyl group at both terminals and no functional group other than an alkenylsilyl group at the terminal.

Component (A-1) in the present invention may be a linear organopolysiloxane having a hydrosilyl group at both terminals and no functional group other than a hydrosilyl group at the terminal, or a mixture of this hydrosilyl group-containing organopolysiloxane and a linear organopolysiloxane having at least one functional group other than a hydrosilyl group at the terminal. It is difficult to completely avoid contamination by organopolysiloxane having a functional group other than a hydrosilyl group at the terminal in the preparation of the organopolysiloxane having no functional group other than a hydrosilyl group at both terminals. In the present invention, the percentage of the number of terminal silicon atoms having a functional group other than a hydrosilyl group at the terminal may be less than 5%, preferably less than 2%, based on a total number of terminal silicon atoms of the whole organopolysiloxanes in component (A-1). If the percentage is 5% or more, the addition polymerization may converge so that component (A) may not have an intended high viscosity.

Examples of the functional group other than a hydrosilyl group include a hydroxyl group, and alkoxy groups such as a methoxy group and an ethoxy group. For example, an organopolysiloxane obtained by the polymerization of tetramethyldisiloxane and octamethylcyclotetrasiloxane may have a functional group such as a hydroxyl group at a part of the terminals, due to water contained in the raw materials or polymerization catalyst. When catalyst contains methanol or ethanol, a compound having a methoxy group or an ethoxy group may generate sometimes as a by-product. In order to reduce generation of such a compound having a functional group other than a hydrosilyl group at the terminals, it is effective to decrease amounts of impurities such as water at the time of preparing raw materials or use a raw material having a small molecular weight.

The linear organopolysiloxane having a hydrosilyl group at both terminals and no functional group other than a hydrosilyl group at the terminals has a hydrosilyl group preferably only at both terminals. For example, such a linear organopolysiloxane is represented by the following formula (1). The linear organopolysiloxane may be used either alone or in combination of two or more, as needed.

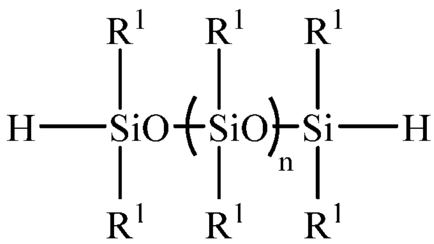
(1)

wherein $R^1$ is, independently of each other, a substituted or unsubstituted, monovalent hydrocarbon group having 1 to 30 carbon atoms, except an alkenyl group, n is an integer of 0 or more and is such that a viscosity of the linear organopolysiloxane at 25°C is 0.1 $mm^2/s$ or more and less than 100,000 $mm^2/s$. n is preferably an integer such that the viscosity at 25°C is 1 $mm^2/s$ or more and less than 10,000 $mm^2/s$, more preferably 1 $mm^2/s$ or more and less than 1,000 $mm^2/s$, still more preferably 10 $mm^2/s$ or more and less than 500 $mm^2/s$.

Examples of $R^1$ include alkyl groups such as a methyl group, an ethyl group, a propyl group, a butyl group, a pentyl group, a hexyl group, a heptyl group, an octyl group, a decyl group, a undecyl group, a dodecyl group, a tetradecyl group, a pentadecyl group, a hexadecyl group, a heptadecyl group, an octadecyl group, a nonadecyl group, an icosyl group, a henicosyl group, a docosyl group, a tricosyl group, a tetrasyl group, and a triacontyl group; aryl groups such as a phenyl group, a tolyl group, and a naphthyl group; aralkyl groups such as a benzyl group and a phenethyl group; cycloalkyl groups such as a cyclopentyl group, a cyclohexyl group, and a cycloheptyl group; and these groups in which a part or all of the hydrogen atoms bonded to a carbon atom are substituted with an atom such as a halogen atom (e.g., a fluorine atom, a chlorine atom, a bromine atom, or a iodine atom) and/or a substituent such as a hydroxyl group, an acryloyloxy group, a methacryloyloxy group, an epoxy group, a glycidoxy group, and a carboxyl group. Particularly, it is industrially preferred that 50 mol% or more of $R^1$ is a methyl group.

For example, when all of the $R^1$ are a methyl group, the linear organopolysiloxane is represented by the following formula (2).

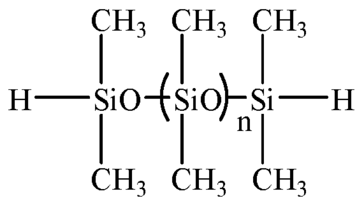
(2)

wherein n is as described above.

The linear organopolysiloxane having at least one functional group other than a hydrosilyl group at the terminal is, for example, such that at least one of the hydrogen atoms bonded to the terminal silicon atom in formula (1) is substituted with a functional group such as a hydroxyl group, a methoxy group or an ethoxy group, such as a linear organopolysiloxane having a hydrosilyl group only at one terminal and a functional group other than a hydrosilyl group at the other terminal, and a linear organopolysiloxane having a functional group other than a hydrosilyl group at both terminals and no hydrosilyl group.

Component (A-2) in the present invention is a linear organopolysiloxane having an alkenylsilyl group at both terminals and no a functional group other than an alkenylsilyl group at the terminal or a mixture of this alkenylsilyl group-containing linear organopolysiloxane and a linear organopolysiloxane having at least one functional group other than an alkenylsilyl group at the terminal. It is difficult to completely avoid contamination by organopolysiloxane having a functional group other than an alkenyl group at the terminal in the preparation of the organopolysiloxane having no functional group other than an alkenyl group at both terminals. In the present invention, the percentage of the number of silicon atoms having a functional group other than an alkenyl group at the terminal may be less than 5%, preferably less than 2%, based on a total number of terminal silicon atoms of the whole organopolysiloxanes in component (A-2). If the percentage is 5% or more, the addition polymerization may converge so that component (A) may not have an intended high viscosity.

Examples of the functional group other than an alkenyl group include a hydroxyl group, and alkoxy groups such as a methoxy group and an ethoxy group. For example, an organopolysiloxane obtained by the polymerization of tetramethyldisiloxane and octamethylcyclotetrasiloxane may have a functional group such as a hydroxyl group at a part of the terminals, due to water contained in the raw materials or polymerization catalyst. When catalyst contains methanol or ethanol, a compound having a methoxy group or an ethoxy group may generate sometimes as a by-product. In order to reduce generation of such a compound having a functional group other than an alkenyl group at the terminals, it is effective to decrease amounts of impurities such as water at the time of preparing raw materials or use a raw material having a small molecular weight.

The linear organopolysiloxane having an alkenylsilyl group at both terminals and no functional group other than an alkenylsilyl group at the terminal has an alkenylsilyl group preferably only at both terminals. For example, such a linear organopolysiloxane is represented by the following formula (3). The linear organopolysiloxane may be used either alone or in combination of two or more as needed.

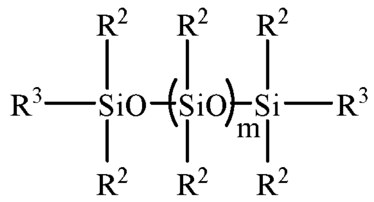
(3)

wherein $R^2$ is, independently of each other, a substituted or unsubstituted, monovalent hydrocarbon group having 1 to 30 carbon atoms, except an alkenyl group, m is an integer of 0 or more and such that a viscosity of the linear organopolysiloxane at 25°C is 0.1 $mm^2/s$ or more and less than 100,000 $mm^2/s$. preferably 1 $mm^2/s$ or more and less than 10,000 $mm^2/s$, more preferably 5 $mm^2/s$ or more and less than 6,000 $mm^2/s$, still more preferably 10 $mm^2/s$ or more and less than 1,000 $mm^2/s$. Examples of $R^2$ include those defined for $R^1$.

Examples of $R^3$ include a vinyl group, an allyl group, a propenyl group, a butenyl group, a pentenyl group and a hexenyl group. A vinyl group is industrially preferred. For example, when all of $R^2$ are a methyl group and all of $R^3$ are a vinyl group, the linear organopolysiloxane is represented by the following formula (4-1). When all of $R^2$ are a methyl group and all of $R^3$ are a hexenyl group, the linear organopolysiloxane is represented by the following formula (4-2).

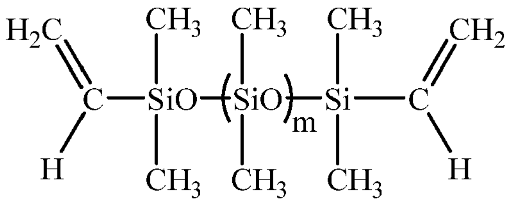

(4-1)

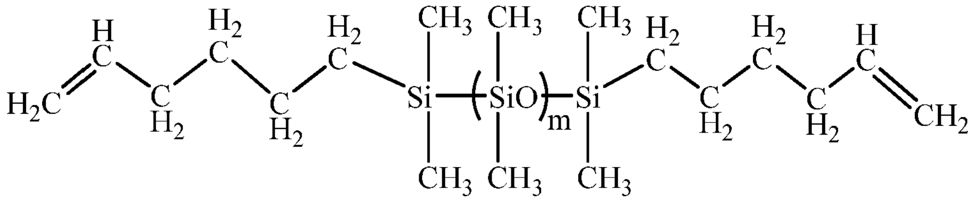

(4-2)

wherein m is as defined above.

The linear organopolysiloxane having at least one functional group other than an alkenyl group at the terminal is, for example, such represented by the formula (3) wherein at least one of terminal $R^3$ is a functional group such as a hydroxyl group, a methoxy group or an ethoxy group, such as a linear organopolysiloxane having an alkenyl group only at one terminal and a functional group other than an alkenyl group at the other terminal and a linear organopolysiloxane having a functional group other than an alkenyl group at both terminals and no an alkenyl group.

A solution of component (A-1) and component (A-2) preferably has a viscosity at 25°C of less than 100,000 $mm^2/s$, more preferably 10,000 $mm^2/s$ or less, further preferably 1,000 $mm^2/s$ or less. If the solution has a viscosity above the upper limit, it may be difficult to make a particle size of the emulsion small.

A mass ratio of the alkenylsilyl group-containing organopolysiloxane (A-2) to the hydrosilyl group-containing organopolysiloxane (A-1) is preferably such that a ratio of the number of the alkenylsilyl group in component (A-2) to the number of the hydrosilyl group in component (A-1) is preferably in a range of from 0.5 to 2, more preferably from 0.8 to 1.5.

Components (A-1) and (A-2) may contain octamethylcyclotetrasiloxane as an impurity, but its content is preferably 1000 mass ppm or less, preferably 500 mass ppm or less, based on the total mass of components (A-1) and (A-2). A lower limit is not particularly limited and the smaller, the better. Therefore, the content of octamethylcyclotetrasiloxane may be 0 mass ppm.

Component (A) is an addition reaction product of the hydrosilyl group-containing organopolysiloxane (A-1) with the alkenylsilyl group-containing organopolysiloxane (A-2). Any known platinum group metal catalyst may be used for the addition reaction, such as platinum (including platinum black), rhodium and palladium; platinum chlorides, chloroplatinic acids, and chloroplatinates such as $H_2PtCl_4 \cdot kH_2O$, $H_2PtCl_6 \cdot kH_2O$, $NaHPtCl_6 \cdot kH_2O$, $KHPtCl_6 \cdot kH_2O$, $Na_2PtCl_6 \cdot kH_2O$, $K_2PtCl_4 \cdot kH_2O$, $PtCl_4 \cdot kH_2O$, $PtCl_2$, $Na_2HPtCl_4 \cdot kH_2O$ (wherein k is an integer of from 0 to 6, preferably 0 or 6); alcohol-modified chloroplatinic acids (see USP 3,220,972); complexes of a platinum chloride or chloroplatinic acid with an olefin (see USP 3,159,601, USP 3,159,662, and USP 3,775,452), complexes of a chloroplatinic acid and a vinyl-containing siloxane, and complexes of platinum and a vinyl-containing siloxane; platinum group metals such as platinum black and palladium supported on a carrier such as alumina, silica or carbon; rhodium-olefin complexes; and chlorotris(triphenylphosphine)rhodium (Wilkinson's catalyst).

An amount of the platinum group metal catalyst may be an effective amount to promote the addition reaction. For example, the amount of a platinum-containing catalyst may be such that the mass of the platinum in the catalyst is 0.1 to 100 ppm by mass, preferably 0.5 to 50 ppm, still more preferably 1 to 30 ppm, based on the total mass of components (A-1) and (A-2).

Component (B)

The surfactant (B) functions as a dispersant for component (A) in an aqueous silicone dispersion. It also functions as an emulsifying agent for components (A-1) and (A-2) in the emulsification of components (A-1) and (A-2) and as a dispersant for the platinum group metal catalyst in the preparation method wherein components (A-1) and (A-2) are emulsified in water using a surfactant and then the platinum group metal catalyst is added to conduct the addition reaction.

The surfactant may be nonionic surfactants, cationic surfactants, anionic surfactants or amphoteric surfactants or a combination thereof.

Examples of the nonionic surfactant include polyoxyethylene alkyl ethers, polyoxyethylene polyoxypropylene alkyl ethers, polyoxyethylene alkyl phenyl ethers, polyethylene glycol fatty acid esters, polyoxyethylene sorbitan fatty acid esters, polyoxyethylene sorbitol fatty acid esters, polyoxyethylene glycerin fatty acid esters, polyglycerin fatty acid esters,

propylene glycol fatty acid esters, polyoxyethylene castor oils, polyoxyethylene hydrogenated castor oils, polyoxyethylene hydrogenated castor oil fatty acid esters, polyoxyethylene alkyl amines, polyoxyethylene fatty acid amides, polyoxyethylene-modified organopolysiloxanes, and polyoxyethylene polyoxypropylene-modified organopolysiloxanes. When two or more of these surfactants are used in combination, a polyether-free nonionic surfactant such as sorbitan fatty acid ester or glycerin fatty acid ester may be used in combination.

Examples of the cationic surfactant include ammonium group-containing surfactants such as alkyl dimethyl ammonium halide and compounds having the following chemical formula: $R^4R^5R^6R^7N^+X^-$, wherein $R^4$, $R^5$, $R^6$ and $R^7$ are, independently of each other, a group selected from the group consisting of alkyl groups, aryl groups, alkylalkoxy groups, arylalkoxy groups and alkoxy groups, and X represents an anion.

Examples of the anionic surfactant include alkyl sulfates such as sodium lauryl sulfate, polyoxyethylene alkyl ether sulfates, polyoxyethylene alkyl phenyl ether sulfates, fatty acid alkylol amide sulfates, alkyl benzene sulfonates, polyoxyethylene alkyl phenyl ether sulfonates, $\alpha$-olefin sulfonates, $\alpha$-sulfo fatty acid ester salts, alkyl naphthalene sulfonic acids, alkyl diphenyl ether disulfonates, alkane sulfonates, N-acyl taurates, dialkyl sulfosuccinates, monoalkyl sulfosuccinates, polyoxyethylene alkyl ether sulfosuccinates, fatty acid salts, polyoxyethylene alkyl ether carboxylates, **N-**acylamino acid salts, monoalkyl phosphates, dialkyl phosphates, and polyoxyethylene alkyl ether phosphates.

Examples of the amphoteric surfactant include amphoteric derivatives of a secondary and/or tertiary amine, having an anionic group or betaine derivative and a combination of them.

Any surfactant may be used without limitation, but a nonionic surfactant or anionic surfactant is preferred because an amine-containing compound may inhibit the action of the platinum group metal catalyst.

An amount of component (B) is 0.1 to 12 parts by mass, preferably 0.5 to 10 parts by mass, relative to 100 parts by mass of component (A). If the amount is less than 0.1 part by mass, the particle size in the emulsification of the raw materials of component (A) may be large or emulsification is impossible.

Component (C)

In the present invention, water (C) is a dispersion medium for component (A). An amount of component (C) is 10 to 200 parts by mass, preferably 25 to 150 parts by mass, relative to 100 parts by mass of component (A). When the amount is less than 10 parts by mass, the viscosity of the aqueous silicone dispersion may be too high, which makes the preparation or handling difficult.

Other components

The emulsion composition of the present invention may further contain a water-soluble polymer compound for improving the dispersibility of component (A). The water-soluble polymer compound is not particularly limited, such as nonionic water-soluble polymer compounds, anionic water-soluble polymer compounds, cationic water-soluble polymer compounds, and amphoteric water-soluble polymer compounds.

Examples of the nonionic water-soluble polymer compound include polymers of vinyl alcohol, vinyl alcohol/vinyl acetate copolymers, polymers of acrylamide, polymers of vinylpyrrolidone, vinyl pyrrolidone/vinyl acetate copolymers, polyethylene glycol, polymers of isopropylacrylamide, polymers of methyl vinyl ether, starch, methyl cellulose, hydroxyethyl cellulose, hydroxypropyl cellulose, guar gum, and xanthan gum.

Examples of the anionic water-soluble polymer compound include polymers of sodium acrylate, sodium acrylate/sodium maleate copolymers, sodium acrylate/acrylamide copolymers, polymers of sodium styrene sulfonate, sodium polyisoprene sulfonate/styrene copolymers, polymers of sodium naphthalene sulfonate, carboxymethyl starch, starch phosphate, carboxymethyl cellulose, sodium alginate, gum arabic, carrageenan, sodium sulfate chondroitin, and sodium hyaluronate.

Examples of the cationic water-soluble polymer compound include polymers of dimethyl diallyl ammonium chloride, polymers of vinylimidazoline, polymers of methyl vinyl imidazolium chloride, polymers of ethyltrimethylammonium chloride acrylate, polymers of ethyl trimethylammonium chloride methacrylate, polymers of acrylamidopropyltrimethylammonium chloride, polymers of mathacrylamidopropyltrimethylammonium chloride, epichlorohydrin/dimethylamine polymers, polymers of ethyleneimine, quaternized polymers of ethyleneimine, polymers of allylamine hydrochloride, polylysine, cationic starch, cationized cellulose, and chitosan, and derivatives thereof obtained by copolymerizing the aforesaid polymer with a monomer having a nonionic group or anionic group.

Examples of the amphoteric water-soluble polymer compound include ethyltrimethylammonium chloride acrylate/acrylic acid/acrylamide copolymers, ethyltrimethylammonium chloride methacrylate/acrylic acid/acrylamide copolymers, and Hofmann degradation products of polymers of acrylamide.

The emulsion composition of the present invention may contain an antibacterial-antiseptic or antibiotic agent. Examples of the antibacterial-antiseptic agent include alkyl paraoxybenzoate, benzoic acid, sodium benzoate, sorbic acid, potassium sorbate, and phenoxyethanol. Examples of the antibiotic agent include benzoic acid, salicylic acid, carbolic

acid, sorbic acid, alkyl paraoxybenzoate, parachlorometacresol, hexachlorophene, benzalkonium chloride, chlorohexidine chloride, trichlorocarbanilide, photosensitizer, and phenoxyethanol.

Preparation method

The emulsion composition of the present invention may be prepared by emulsifying the hydrosilyl group-containing linear organopolysiloxane (A-1) and the alkenylsilyl group-containing linear organopolysiloxane (A-2) in water (C) with the surfactant (B) and, then, adding a platinum group metal catalyst to conduct an addition reaction of components (A-1) with (A-2).

The emulsification may be carried out with a conventional emulsification-dispersion instrument. Examples of the emulsification-dispersion instrument include a high-speed rotation centrifugal radial type stirrer such as homodisper, a high-speed rotation shearing type stirrer such as homomixer, and a high-pressure injection type emulsification-dispersion instrument such as pressure type homogenizer, a colloid mill, and an ultrasonic emulsifier.

The platinum group metal catalyst may be added after the emulsifying step as described above, but it may be dissolved in advance in the raw materials for component (A), that is, a mixture of components (A-1) and (A-2). When the platinum group metal catalyst is added after the emulsifying step, it may be dissolved in a solvent and, then added. When the platinum group metal catalyst has poor dispersibility in water, it is recommended that the platinum group metal catalyst is first dissolved in a nonionic surfactant and added to water. When the platinum group metal catalyst is dissolved in advance in the raw materials for component (A), it is preferred to keep the reaction mixture cool, for example, at a low temperature such as 5°C or lower to prevent pre-mature addition reaction before the completion of the emulsifying step. The addition reaction may be carried out, for example, at 15 to 60°C. When the reaction does not complete, the reaction may be carried out with heating at a temperature lower than 100°C. A stirring time for the reaction is not particularly limited, and it is usually from 1 to 24 hours.

Emulsion composition

The organopolysiloxane (A) which is an addition reaction product of the linear organopolysiloxane (A-1) having a hydrosilyl group at both terminals and the linear organopolysiloxane (A-2) having an alkenylsilyl group at both terminals is dispersed in the emulsion composition of the present invention.

The addition reaction between the organopolysiloxane (A-1) having a hydrosilyl group at both terminals and the organopolysiloxane (A-2) having an alkenylsilyl group at both terminals forms a silalkylene bond to extend a chain length of the addition reaction product. For example, an addition reaction product between the compound represented by the aforesaid formula (2) as component (A-1) and the compound represented by the aforesaid formula (4-1) as component (A-2) is an organopolysiloxane having a structure represented by the following formula (5):

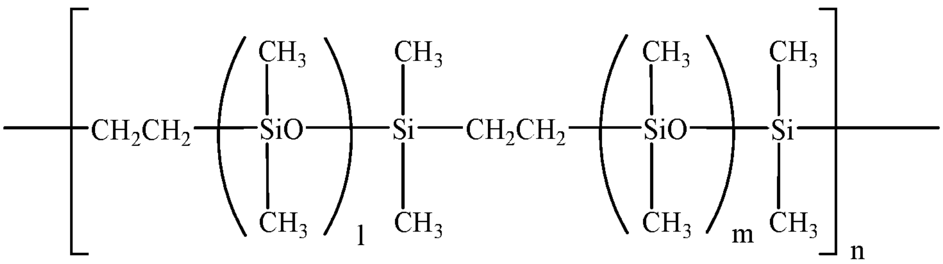

(5)

wherein l, m, and n are, independently of each other, an integer of 0 or more.

The organopolysiloxane (A) dispersed in the emulsion composition has a viscosity at 25°C of 30,000,000 mPa·s or more. An upper limit is 5,000,000 Pa·s or less, preferably 3,000,000 Pa·s or less.

The dispersed particles in the emulsion composition preferably have a volume average particle size of 1,000 nm or less, more preferably 700 nm or less. A lower limit is not particularly limited, and is preferably about 30 nm or more. In the present invention, the volume average particle size is determined by Laser diffraction/scattering particle size analyzer, LA-960, ex Horiba Ltd.

The amount of octamethylcyclotetrasiloxane contained as an impurity in component (A) is preferably 1,000 ppm or less, particularly preferably 500 ppm or less. The smaller content of the octamethylcyclotetrasiloxane is better. A lower limit is not particularly limited, and most preferably 0 ppm.

## EXAMPLES

The present invention will hereinafter be described more specifically by the Examples and the Comparative Examples but the present invention is not limited by the Examples.

In the following description, "part" or "parts" means part or parts by mass. The term "terminal impurity" means a percentage of the number of terminal silicon atoms having a functional group other than a hydrosilyl group (i.e., hydroxyl group), based on the total number of terminal silicon atoms of the organopolysiloxanes in component (A-1) or a percentage of the number of terminal silicon atoms having a functional group other than an alkenylsilyl group (i.e., hydroxyl group), based on the total number of terminal silicon atoms of the organopolysiloxanes in component (A-2). The terminal impurity was calculated from $^{29}$Si-NMR spectrum.

More specifically, the terminal impurity of the component (A-1) was a percentage of a peak area derived from terminal Si atoms having a functional group other than a hydrosilyl group (i.e., hydroxyl group), relative to a peak area derived from all of the terminal Si atoms.

The terminal impurity of the component (A-2) was determined from a percentage of a peak area derived from terminal Si atoms having other functional group based on a peak area derived from all the terminal Si atoms [that is, (a peak area derived from Si atoms having an alkenylsilyl group) + (a peak area derived from Si atoms having other functional group)]. The peak area is proportional to the number and the mol of Si atoms.

The hydrosilyl group-containing organopolysiloxanes used in the following Examples and Comparative Examples are as described below.

(1) Component (A-1) used in Examples 1 and 2: hydrosilyl group-containing organopolysiloxane 1

The component comprises, as a main component, an organopolysiloxane having a hydrosilyl group at both terminals and represented by the following formula (1), wherein all of $R^1$ are a methyl group. The component further comprises 1.0 % terminal impurity of an organopolysiloxane represented by the following formula (1) wherein at least one of the hydrogen atoms bonded to the silicon atoms present at the terminal is replaced with a hydroxyl group.

The hydrosilyl group-containing organopolysiloxane 1 has a viscosity of 16 mm$^2$/s, an octamethylcyclotetrasiloxane content of 200 ppm or less, and a hydrogen value of 0.13 mol/100 g.

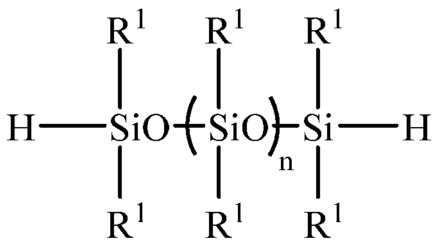

(1)

(2) Component (A-1) used in Example 3: hydrosilyl group-containing organopolysiloxane 2

The component comprises, as a main component, an organopolysiloxane having a hydrosilyl group at both terminals, and represented by the formula (1), wherein all of $R^1$ are a methyl group. The component further comprises 0.8 % terminal impurity of an organopolysiloxane represented by the formula (1) wherein at least one of the hydrogen atoms bonded to the silicon atoms present at the terminal is replaced with a hydroxyl group.

The hydrosilyl group-containing organopolysiloxane 2 has a viscosity of 136 mm$^2$/s, an octamethylcyclotetrasiloxane content of 200 ppm or less, and a hydrogen value of 0.033 mol/100 g.

(3) Component (A-1) used in Example 4 and Comparative Example 4: hydrosilyl group-containing organopolysiloxane 3

The component comprises, as a main component, an organopolysiloxane having a hydrosilyl group at both terminals, and represented by the formula (1), wherein all of $R^1$ are a methyl group. The component further comprises 1.0 % terminal impurity of an organopolysiloxane represented by the formula (1) wherein at least one of the hydrogen atoms bonded to the silicon atoms present at the terminal is replaced with a hydroxyl group.

The hydrosilyl group-containing organopolysiloxane 3 has a viscosity of 131 mm$^2$/s, an octamethylcyclotetrasiloxane content of 200 ppm or less, and a hydrogen value of 0.033 mol/100 g.

(4) Component (A-1) used in Comparative Example 1: hydrosilyl group-containing organopolysiloxane 4

The component comprises, as a main component, an organopolysiloxane having hydrosilyl groups at both terminals, and represented by the formula (1), wherein all of $R^1$ are a methyl group. The component contains 9.0 % terminal impurity of an organopolysiloxane represented by the formula (1) wherein at least one of the hydrogen atoms bonded to the silicon atoms present at the terminal is replaced with a hydroxyl group.
The hydrosilyl group-containing organopolysiloxane 4 has a viscosity of 2,330 $mm^2/s$, an octamethylcyclotetrasiloxane content of 200 ppm or less, and a hydrogen value of 0.0061 mol/100 g.

(5) Component (A-1) used in Comparative Example 2: hydrosilyl group-containing organopolysiloxane 5

The component comprises, as a main component, an organopolysiloxane having a hydrosilyl group at both terminals and represented by the formula (1), wherein all of $R^1$ are a methyl group. The component further comprises 6.4 % terminal impurity of an organopolysiloxane represented by the formula (1) wherein at least one of the hydrogen atoms bonded to the silicon atoms present at the terminal is replaced with a hydroxyl group.
The hydrosilyl group-containing organopolysiloxane 5 has a viscosity of 5,990 $mm^2/s$, an octamethylcyclotetrasiloxane content of 200 ppm or less, and a hydrogen value of 0.0050 mol/100 g.

(6) Component (A-1) used in Comparative Example 3: hydrosilyl group-containing organopolysiloxane 6

The component comprises, as a main component, an organopolysiloxane having a hydrosilyl group at both terminals and represented by the formula (1), wherein all of $R^1$ are a methyl group. The component further comprises 6.4 % terminal impurity of an organopolysiloxane represented by the formula (1) wherein at least one of the hydrogen atoms bonded to the silicon atoms present at the terminal is replaced with a hydroxyl group.
The hydrosilyl group-containing organopolysiloxane 6 has a viscosity of 130 $mm^2/s$, an octamethylcyclotetrasiloxane content of 200 ppm or less, and a hydrogen value of 0.033 mol/100 g.
The alkenylsilyl group-containing organopolysiloxanes used in the following Examples and Comparative Examples are as follows.

(1) Component (A-2) used in Examples 1 and 3 and Comparative Example 1: alkenyl group-containing organopolysiloxane 1

The component comprises, as a main component, an organopolysiloxane having an alkenylsilyl group at both terminals and represented by the following formula (3), wherein all of $R^2$ are a methyl group and each of $R^3$ is a vinyl group. The component further comprises 1.4 % terminal impurity of an alkenylsilyl group-containing organopolysiloxane represented by the formula (3) wherein at least one of $R^3$ present at the terminals is a hydrogen atom.
The alkenyl group-containing organopolysiloxane 1 has a viscosity of 9,950 $mm^2/s$, an octamethylcyclotetrasiloxane content of 200 ppm or less, and a vinyl value of 0.0052 mol/100 g.

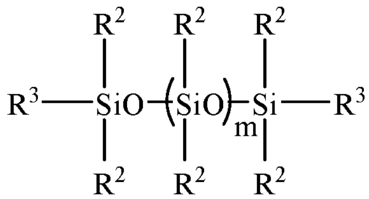

(3)

(2) Component (A-2) used in Example 2: alkenyl group-containing organopolysiloxane 2

The component comprises, as a main component, an organopolysiloxane having an alkenylsilyl group at both terminals and represented by the following formula (3), wherein all of $R^2$ are a methyl group and each of $R^3$ is a vinyl group. The component further comprises 1.9 % terminal impurity of an alkenylsilyl group-containing organopolysiloxane represented by the formula (3) wherein at least one of $R^3$ present at the terminals is a hydrogen atom.
The alkenyl group-containing organopolysiloxane 2 has a viscosity of 5,040 $mm^2/s$, an octamethylcyclotetrasiloxane content of 200 ppm or less, and a vinyl value of 0.0064 mol/100 g.

(3) Component (A-2) used in Example 4 and Comparative Example 3: alkenyl group-containing organopolysiloxane 3

The component comprises, as a main component, an organopolysiloxane having an alkenylsilyl group at both terminals, and represented by the following formula (3), wherein all of $R^2$ are a methyl group and each of $R^3$ is a vinyl group. The component further comprises 0.7 % terminal impurity of an alkenylsilyl group-containing organopolysiloxane represented by the formula (3) wherein at least one of $R^3$ present at the terminals is a hydrogen atom.
The alkenyl group-containing organopolysiloxane 3 has a viscosity of 126 $mm^2/s$, an octamethylcyclotetrasiloxane content of 200 ppm or less, and a vinyl value of 0.035 mol/100 g.

(4) Component (A-2) used in Comparative Example 2: alkenyl group-containing organopolysiloxane 4

The component comprises, as a main component, an organopolysiloxane having an alkenylsilyl group at both terminals and represented by the following formula (3), wherein all of $R^2$ are a methyl group and each of $R^3$ is a vinyl group. The component further comprises 2.0 % terminal impurity of an alkenylsilyl group-containing organopolysiloxane represented by the formula (3) wherein at least one of $R^3$ present at the terminals is a hydrogen atom.
The alkenyl group-containing organopolysiloxane 4 has a viscosity of 9,950 $mm^2/s$, an octamethylcyclotetrasiloxane content of 200 ppm or less, and a vinyl value of 0.0052 mol/100 g.

(5) Component (A-2) used in Comparative Example 4: alkenyl group-containing organopolysiloxane 5

The component comprises, as a main component, an organopolysiloxane having an alkenylsilyl group at both terminals and represented by the following formula (3), wherein all of $R^2$ are a methyl group and each of $R^3$ is a vinyl group. The component further comprises 6.0 % terminal impurity of an alkenylsilyl group-containing organopolysiloxane represented by the formula (3) wherein at least one of $R^3$ present at the terminals is a hydrogen atom.
The alkenyl group-containing organopolysiloxane 5 has a viscosity of 126 $mm^2/s$, an octamethylcyclotetrasiloxane content of 200 ppm or less, and a vinyl value of 0.030 mol/100 g.

[Example 1]

4.1 Parts of (A-1) hydrosilyl group-containing organopolysiloxane 1, 95.9 parts of (A-2) alkenylsilyl group-containing organopolysiloxane 1 (ratio of the numbers of SiVi group/SiH group = 0.91), 5.0 parts of (B) polyoxyethylene lauryl ether (EMULGEN 109P, ex Kao Corporation), and 5.8 parts of (C) water were emulsified with a homomixer and a homodisper. Then, 53.8 parts of (C) water were added and the resulting mixture was emulsified with a homomixer. The temperature of the emulsion thus obtained was adjusted to 50 ± 2°C; a mixture of 0.13 part of an isododecane solution of a platinum/vinyl group-containing siloxane complex (platinum content: 0.5%) and 0.27 part of polyoxyethylene lauryl ether was added under stirring; and then, the resulting mixture was stirred at the same temperature for 2 hours so as to addition-react components (A-1) and (A-2) to obtain an organopolysiloxane-containing emulsion composition.

[Example 2]

5.0 Parts of (A-1) hydrosilyl group-containing organopolysiloxane 1, 95.0 parts of (A-2) alkenylsilyl group-containing organopolysiloxane 2 (ratio of the number of SiVi group/SiH group = 0.91), 5.8 parts of (B) polyoxyethylene lauryl ether (EMULGEN 109P, ex Kao Corporation), and 5.8 parts of (C) water were emulsified with a homomixer and a homodisper. Then, 52.6 parts of (C) water were added and the resulting mixture was emulsified with a homomixer. The temperature of the emulsion thus obtained was adjusted to 25 ± 2°C; a mixture of 0.13 part of an isododecane solution of a platinum/vinyl group-containing siloxane complex (platinum content: 0.5%) and 0.27 part of polyoxyethylene lauryl ether was added under stirring; and then, the resulting mixture was stirred at the same temperature for 2 hours so as to addition-react components (A-1) and (A-2) to obtain an organopolysiloxane-containing emulsion composition.

[Example 3]

14.9 Parts of (A-1) hydrosilyl group-containing organopolysiloxane 2, 85.1 parts of (A-2) alkenylsilyl group-containing organopolysiloxane 1 (ratio of the number of SiVi group/SiH group = 0.91), 5.0 parts of (B) polyoxyethylene lauryl ether (EMULGEN 109P, ex Kao Corporation), and 6.7 parts of (C) water were emulsified with a homomixer and a homodisper. Then, 52.6 parts of (C) water were added and the resulting mixture was emulsified with a homomixer. The temperature of the emulsion thus obtained was adjusted to 50 ± 2°C; a mixture of 0.13 part of an isododecane solution of a platinum/vinyl group-containing siloxane complex (platinum content: 0.5%) and 0.27 part of polyoxyethylene lauryl ether was added under stirring; and then, the resulting mixture was stirred at the same temperature for 2 hours ao as to addition-react components (A-1) and (A-2) to obtain an organopolysiloxane-containing emulsion composition.

[Example 4]

53.6 Parts of (A-1) hydrosilyl group-containing organopolysiloxane 3, 46.4 parts of (A-2) alkenylsilyl group-containing organopolysiloxane 3 (ratio of the number of SiVi group/SiH group = 0.91), 1.3 parts of polyoxyethylene stearyl ether (EMALEX 615, ex NIHON EMULSION Co., Ltd.) and 3.8 parts of polyoxyethylene stearyl ether (EMALEX 640, ex NIHON EMULSION Co., Ltd.), each (B), and 20.9 parts of (C) water were emulsified with a homomixer. Then, 36.0 parts of (C) water were added and the resulting mixture was emulsified therein with a homomixer, which was then subjected once to a high-pressure treatment at a treatment pressure of 100 MPa with a high-pressure emulsifier. The temperature of the emulsion thus obtained was adjusted to 25 $\pm$ 2°C; a mixture of 0.13 part of an isododecane solution of a platinum/vinyl group-containing siloxane complex (platinum content: 0.5%) and 0.27 part of polyoxyethylene lauryl ether was added under stirring; and then, the resulting mixture was stirred at the same temperature for 2 hours so as to addition-react components (A-1) and (A-2) to obtain an organopolysiloxane-containing emulsion composition.

[Comparative Example 1]

48.3 Parts of (A-1) hydrosilyl group-containing organopolysiloxane 4, 51.7 parts of (A-2) alkenylsilyl group-containing organopolysiloxane 1 (ratio of the number of SiVi group/SiH group = 0.91), 5.8 parts of (B) polyoxyethylene lauryl ether (EMULGEN 109P, ex Kao Corporation), and 7.5 parts of (C) water were emulsified with a homomixer and a homodisper. Then, 50.9 parts of (C) water were added and the resulting mixture was emulsified with a homomixer. The temperature of the emulsion thus obtained was adjusted to 50 $\pm$ 2°C; a mixture of 0.05 part of an isododecane solution of a platinum/vinyl group-containing siloxane complex (platinum content: 0.5%) and 0.09 part of polyoxyethylene lauryl ether was added under stirring; and then, the resulting mixture was stirred at the same temperature for 2 hours so as to addition-react components (A-1) and (A-2) to obtain an organopolysiloxane-containing emulsion composition.

[Comparative Example 2]

53.1 Parts of (A-1) hydrosilyl group-containing organopolysiloxane 5, 46.9 parts of (A-2) alkenylsilyl group-containing organopolysiloxane 4 (ratio of the number of SiVi group/SiH group = 0.91), 5.8 parts of (B) polyoxyethylene lauryl ether (EMULGEN 109P, ex Kao Corporation), and 5.8 parts of (C) water were emulsified with a homomixer and a homodisper. Then, 52.6 parts of (C) water were added and the resulting mixture was emulsified with a homomixer. The temperature of the emulsion thus obtained was adjusted to 25 $\pm$ 2°C; a mixture of 0.3 part of an isododecane solution of a platinum/vinyl group-containing siloxane complex (platinum content: 0.5%) and 0.6 part of polyoxyethylene lauryl ether was added under stirring; and then, the resulting mixture was stirred at the same temperature for 2 hours so as to addition-react components (A-1) and (A-2) to obtain an organopolysiloxane-containing emulsion composition.

[Comparative Example 3]

53.8 Parts of (A-1) hydrosilyl group-containing organopolysiloxane 6, 46.2 parts of (A-2) alkenylsilyl group-containing organopolysiloxane 3 (ratio of the number of SiVi group/SiH group = 0.91), 2.4 parts of polyoxyethylene lauryl ether (EMULGEN 104P, ex Kao Corporation) and 3.6 parts of polyoxyethylene lauryl ether (EMULGEN 123P; ex Kao Corporation), each (B), and 32.0 parts of (C) water were emulsified with a homomixer. Then, 59.6 parts of (C) water were added and the resulting mixture was emulsified with a homomixer, which was then subjected once to a high-pressure treatment at a treatment pressure of 100 MPa with a high-pressure emulsifier. The temperature of the emulsion thus obtained was adjusted to 25 $\pm$ 2°C; a mixture of 0.16 part of an isododecane solution of a platinum/vinyl group-containing siloxane complex (platinum content: 0.5%) and 0.32 part of polyoxyethylene lauryl ether was added under stirring; and then, the resulting mixture was stirred at the same temperature for 2 hours so as to addition-react components (A-1) and (A-2) to obtain an organopolysiloxane-containing emulsion composition.

[Comparative Example 4]

55.0 Parts of (A-1) hydrosilyl group-containing organopolysiloxane 3, 45.0 parts of (A-2) alkenylsilyl group-containing organopolysiloxane 5 (ratio of the number of SiVi group/SiH group = 0.91), 2.4 parts of polyoxyethylene lauryl ether (EMULGEN 104P, ex Kao Corporation) and 3.6 parts of polyoxyethylene lauryl ether (EMULGEN 123P, ex Kao Corporation), each (B), and 32.0 parts of (C) water were emulsified with a homomixer. Then, 59.6 parts of (C) water were added and the resulting mixture was emulsified with a homomixer, which was then subjected once to a high-pressure treatment at a treatment pressure of 100 MPa with a high-pressure emulsifier. The temperature of the emulsion thus

obtained was adjusted to 25 ± 2°C; a mixed and dissolved product of 0.16 part of an isododecane solution of a platinum/vinyl group-containing siloxane complex (platinum content: 0.5%) and 0.32 part of polyoxyethylene lauryl ether was added under stirring; and then, the resulting mixture was stirred at the same temperature for 2 hours so as to addition-react components (A-1) and (A-2) to obtain an organopolysiloxane-containing emulsion composition.

The physical properties of each of the emulsion compositions obtained in the Examples and Comparative Examples were determined and evaluated in accordance with the methods described below. The results are shown in Table **1.**

[Volume average particle size of the emulsion]

Volume average particle size of emulsion is a median diameter determined with a laser diffraction/scattering particle size distribution analyzer, LA-960, ex Horiba Ltd.

[Viscosity of the organopolysiloxane]

200 Grams of isopropyl alcohol was added to 200 g of the emulsion composition with stirring. The precipitated organopolysiloxane only was collected and dried at 105°C for 3 hours. Then, 10 g of the organopolysiloxane was dissolved in 90 g of toluene. A viscosity, η1, and a specific gravity, D, of the solution thus-obtained were determined at 25°C, where the viscosity was measured with a rotational viscometer. A viscosity, η, was calculated from η1 and D, using the following formulas. The following formulas are empirical ones. It has been confirmed that a viscosity of raw rubber measured in a Newtonian fluid region with a rheometer coincides with a value obtained using the following formulas.

$$\eta 2 = \eta 1 \times D$$

$$\eta 3 = 0.5385 \times \ln(\eta 2) + 0.1033$$

$$\eta 4 = 10^{E},\ E = 1.19973 \times \eta 3 + 0.974$$

$$\eta = \{462.55 \ln(\eta 4) - 3405.2\} \times 10000\ (\eta 4 < 10000)$$

$$\eta = \{1256.2 \ln(\eta 4) - 10506\} \times 10000\ (\eta 4 > 10000)$$

[Octamethylcyclotetrasiloxane content in the organopolysiloxane]

0.1 Gram of the emulsion composition was subjected to extraction (shaken for 3 hours) with 10 ml of acetone containing 20 ppm by mass of tetradecane as an internal standard and, then, was left to stand overnight. Then, an acetone layer was collected and the octamethylcyclotetrasiloxane content was determined by gas chromatography.

[Stability of the emulsion]

100 Grams of the emulsion composition was placed in a 100-ml glass bottle and left to stand at 40°C for one month. Then, its appearance was observed. When the emulsion was in a state of single uniform phase and no separation was found, it was evaluated to have good stability and indicated by "A" in Table 1. When separation of the emulsion into two phases was seen, it was evaluated to have poor stability and indicated by "B" in Table 1.

[Table 1]

| | Terminal impurity, % | | Volume average particle size, nm | Viscosity of the organopolysiloxane, $\times 10^7$ mPa•s | $D_4$ Content, ppm | Stability, 40°C for one month |
|---|---|---|---|---|---|---|
| | A-1 | A-2 | | | | |
| Example 1 | 1.0 | 1.4 | 430 | 6.8 | 122 | A |
| Example 2 | 1.0 | 1.9 | 260 | 4.1 | <100 | A |

(continued)

| | Terminal impurity, % | | Volume average particle size, nm | Viscosity of the organopolysiloxane, $\times 10^7$ mPa•s | $D_4$ Content, ppm | Stability, 40°C for one month |
|---|---|---|---|---|---|---|
| | A-1 | A-2 | | | | |
| Example 3 | 0.8 | 1.4 | 450 | 8.2 | <100 | A |
| Example 4 | 1.0 | 0.7 | 660 | 5.5 | <100 | A |
| Comparative Example 1 | 9.0 | 1.4 | 400 | 0.62 | <100 | A |
| Comparative Example 2 | 6.4 | 2.0 | 300 | 0.83 | <100 | A |
| Comparative Example 3 | 6.4 | 0.7 | 450 | 0.25 | <100 | A |
| Comparative Example 4 | 1.0 | 6.0 | 400 | 0.65 | <100 | A |
| (Note) $D_4$: Octamethylcyclotetrasiloxane | | | | | | |

The emulsion compositions of the present invention were prepared using the specific organopolysiloxanes as a raw material. The emulsions had small particle sizes and comprised the high-viscosity organopolysiloxanes. The emulsions had good stability over time. As seen in Comparative Examples 1 to 4, when the raw material organopolysiloxanes had many functional groups other than a hydrosilyl group at the terminal, an emulsion comprising organopolysiloxane having a desired high viscosity cannot be obtained.

## INDUSTRIAL APPLICABILITY

The present invention provides an emulsion composition which comprises a high-viscosity organopolysiloxane and a smaller amount of octamethylcyclotetrasiloxane as an impurity, and has a small particle size, and good stability over time. The high-viscosity organopolysiloxane emulsion composition is useful as a main component or additive for products such as cosmetics, personal care compositions, home care compositions, release agents, lubricants, coating agents, and fiber treatment agents.

## Claims

**1.** An emulsion composition comprising

(A) an organopolysiloxane having a viscosity at 25°C of 30,000,000 mPa·s or more and 5,000,000 Pa·s or less, as a value measured with a rotational viscosimeter according to the method disclosed in the description, as an addition reaction product of a hydrosilyl group of the following component (A-1) with an alkenyl group of the following component (A-2):

(A-1) a linear organopolysiloxane having a hydrosilyl group at both terminals of the molecular chain and no functional group other than a hydrosilyl group at the terminals; or a mixture of said hydrosilyl group-containing linear organopolysiloxane and a linear organopolysiloxane having at least one functional group other than a hydrosilyl group at the terminal and optionally having a hydrosilyl group at the terminal, wherein a percentage of the number of terminal silicon atoms having the functional group other than a hydrosilyl group is less than 5%, based on a total number of terminal silicon atoms of the whole organopolysiloxanes in component (A-1); and

(A-2) a linear organopolysiloxane having an alkenylsilyl group at both terminals of the molecular chain and no functional group other than an alkenylsilyl group at the terminals, or a mixture of said alkenylsilyl group-containing linear organopolysiloxane and a linear organopolysiloxane having at least one functional group other than an alkenylsilyl group at the terminal and optionally having an alkenylsilyl group at the terminal, wherein a percentage of the number of terminal silicon atoms having the functional group other than an alkenylsilyl group is less than 5%, based on a total number of terminal silicon atoms of the whole organopolysiloxanes in component (A-2),

wherein a ratio of the number of the alkenylsilyl groups in component (A-2) to the number of the hydrosilyl groups in component (A-1) is 0.5 to 2;

(B) a surfactant in an amount of 0.1 to 12 parts by mass, relative to 100 parts by mass of component (A); and
(C) water in an amount of 10 to 200 parts by mass, relative to 100 parts by mass of component (A).

**2.** The emulsion composition according to claim 1, wherein dispersed particles in the emulsion composition have a volume average particle size of 1,000 nm or less as a median diameter determined with a laser diffraction/scattering particle size distribution analyzer.

**3.** The emulsion composition according to claim 1 or 2, wherein an amount of octamethylcyclotetrasiloxane included in component (A-1) and component (A-2) is 1,000 mass ppm or less, based on the total mass of components (A-1) and (A-2).

**4.** The emulsion composition according to any one of claims 1 to 3, wherein

(A-1) the linear organopolysiloxane having a hydrosilyl group at both terminals of the molecular chain and no functional group other than a hydrosilyl group at the terminals is represented by the following formula (1)

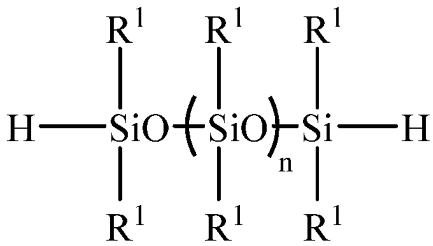

(1)

wherein $R^1$ is, independently of each other, a substituted or unsubstituted, monovalent hydrocarbon group having 1 to 30 carbon atoms, except an alkenyl group, n is an integer of 0 or more and is such that a viscosity of the linear organopolysiloxane at 25°C is 0.1 $mm^2/s$ or more and less than 100,000 $mm^2/s$, as a value measured with a rotational viscometer,
and
(A-2) the linear organopolysiloxane having an alkenylsilyl group at both terminals of the molecular chain and no functional group other than an alkenylsilyl group at the terminals is represented by the following formula (3)

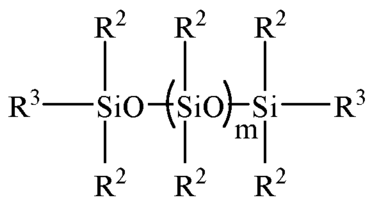

(3)

wherein $R^2$ is, independently of each other, a substituted or unsubstituted, monovalent hydrocarbon group having 1 to 30 carbon atoms, except an alkenyl group, m is an integer of 0 or more and such that a viscosity of the linear organopolysiloxane at 25°C is 0.1 $mm^2/s$ or more and less than 100,000 $mm^2/s$, as a value measured with a rotational viscometer.

**5.** The emulsion composition according to claim 4, wherein

the linear organopolysiloxane having at least one functional group other than a hydrosilyl group at the terminal is such that at least one of the hydrogen atoms bonded to the terminal silicon atom in the formula (1) is substituted with a functional group selected from a hydroxyl group, a methoxy group and an ethoxy group, and
the linear organopolysiloxane having at least one functional group other than an alkenyl group at the terminal is such represented by the formula (3) wherein at least one of terminal $R^3$ is a functional group selected from a hydroxyl group, a methoxy group and an ethoxy group.

**Patentansprüche**

1. Emulsionszusammensetzung, umfassend:

(A) ein Organopolysiloxan mit einer Viskosität bei 25 °C von 30.000.000 mPa-s oder mehr und 5.000.000 Pa-s oder weniger, als ein mit einem Rotationsviskosimeter gemäß dem in der Beschreibung offenbarten Verfahren gemessener Wert, als ein Additionsreaktionsprodukt einer Hydrosilylgruppe der folgenden Komponente (A-1) mit einer Alkenylgruppe der folgenden Komponente (A-2):

(A-1) ein lineares Organopolysiloxan mit einer Hydrosilylgruppe an beiden Enden der Molekülkette und keiner anderen funktionellen Gruppe als einer Hydrosilylgruppe an den Enden; oder ein Gemisch aus dem Hydrosilylgruppen enthaltenden linearen Organopolysiloxan und einem linearen Organopolysiloxan mit mindestens einer anderen funktionellen Gruppe als einer Hydrosilylgruppe an den Enden und optional mit einer Hydrosilylgruppe an den Enden, wobei ein Prozentsatz der Zahl der endständigen Siliciumatome mit der anderen funktionellen Gruppe als einer Hydrosilylgruppe weniger als 5 % ist, bezogen auf die Gesamtzahl der endständigen Siliciumatome der gesamten Organopolysiloxane in Komponente (A-1); und
(A-2) ein lineares Organopolysiloxan mit einer Alkenylsilylgruppe an beiden Enden der Molekülkette und keiner anderen funktionellen Gruppe als einer Alkenylsilylgruppe an den Enden, oder ein Gemisch aus dem alkenylsilylgruppenhaltigen linearen Organopolysiloxan und einem linearen Organopolysiloxan mit mindestens einer anderen funktionellen Gruppe als einer Alkenylsilylgruppe am Ende und optional mit einer Alkenylsilylgruppe am Ende, wobei ein Prozentsatz der Zahl der endständigen Siliciumatome mit einer anderen funktionellen Gruppe als einer Alkenylsilylgruppe weniger als 5 % ist, bezogen auf die Gesamtzahl der endständigen Siliciumatome der gesamten Organopolysiloxane in Komponente (A-2),
wobei ein Verhältnis der Zahl der Alkenylsilylgruppen in Komponente (A-2) zu der Zahl der Hydrosilylgruppen in Komponente (A-1) 0,5 bis 2 ist;

(B) ein Tensid in einer Menge von 0,1 bis 12 Masseteilen, bezogen auf 100 Masseteile von Komponente (A); und
(C) Wasser in einer Menge von 10 bis 200 Masseteilen, bezogen auf 100 Masseteile von Komponente (A).

2. Emulsionszusammensetzung nach Anspruch 1, wobei dispergierte Teilchen in der Emulsionszusammensetzung eine volumengemittelte Teilchengröße von 1.000 nm oder weniger als einen mittleren Durchmesser haben, der mit einem Laserbeugungs-/Streuungs-Teilchengrößenverteilungsanalysator bestimmt wurde.

3. Emulsionszusammensetzung nach Anspruch 1 oder 2, wobei eine in Komponente (A-1) und Komponente (A-2) enthaltene Menge an Octamethylcyclotetrasiloxan 1.000 Massen-ppm oder weniger ist, bezogen auf die Gesamtmasse der Komponenten (A-1) und (A-2).

4. Emulsionszusammensetzung nach einem der Ansprüche 1 bis 3, wobei

(A-1) das lineare Organopolysiloxan mit einer Hydrosilylgruppe an beiden Enden der Molekülkette und keiner anderen funktionellen Gruppe als einer Hydrosilylgruppe an den Enden durch die folgende Formel (1) dargestellt ist

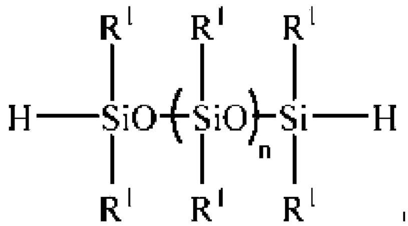

(1)

wobei $R^1$ unabhängig voneinander eine substituierte oder unsubstituierte, einwertige Kohlenwasserstoffgruppe mit 1 bis 30 Kohlenstoffatomen, ausgenommen eine Alkenylgruppe, ist, n eine ganze Zahl von 0 oder mehr ist und so, daß eine Viskosität des linearen Organopolysiloxans bei 25°C 0,1 $mm^2/s$ oder mehr und weniger als 100.000 $mm^2/s$ ist, als ein Wert gemessen mit einem Rotationsviskosimeter,
und

(A-2) das lineare Organopolysiloxan mit einer Alkenylsilylgruppe an beiden Enden der Molekülkette und keiner anderen funktionellen Gruppe als einer Alkenylsilylgruppe an den Enden durch die folgende Formel (3) dargestellt ist

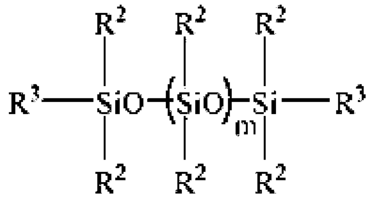

(3)

wobei $R^2$ unabhängig voneinander eine substituierte oder unsubstituierte, einwertige Kohlenwasserstoffgruppe mit 1 bis 30 Kohlenstoffatomen, ausgenommen eine Alkenylgruppe, ist, m eine ganze Zahl von 0 oder mehr ist und so, daß eine Viskosität des linearen Organopolysiloxans bei 25°C 0,1 $mm^2/s$ oder mehr und weniger als 100.000 $mm^2/s$ ist, als ein Wert gemessen mit einem Rotationsviskosimeter.

**5.** Emulsionszusammensetzung nach Anspruch 4, wobei

das lineare Organopolysiloxan mit mindestens einer anderen funktionellen Gruppe als einer Hydrosilylgruppe am Ende so beschaffen ist, dass mindestens eines der an das endständige Siliciumatom gebundenen Wasserstoffatome in der Formel (1) mit einer funktionellen Gruppe, ausgewählt aus einer Hydroxylgruppe, einer Methoxygruppe und einer Ethoxygruppe, substituiert ist, und
wobei das lineare Organopolysiloxan mit mindestens einer anderen funktionellen Gruppe als einer Alkenylgruppe am Ende so durch die Formel (3) dargestellt ist,

wobei mindestens einer der endständigen $R^3$ eine funktionelle Gruppe ist, ausgewählt aus einer Hydroxylgruppe, einer Methoxygruppe und einer Ethoxygruppe.

## Revendications

**1.** Composition d'émulsion comprenant

(A) un organopolysiloxane ayant une viscosité à 25°C de 30 000 000 mPa·s ou plus et de 5 000 000 mPa·s ou moins, en tant que valeur mesurée avec un viscosimètre rotationnel selon le procédé décrit dans la description, en tant que produit de réaction d'addition d'un groupe hydrosilyle du composant (A-1) suivant avec un groupe alcényle du composant (A-2) suivant :

(A-1) un organopolysiloxane linéaire ayant un groupe hydrosilyle aux deux extrémités de la chaîne moléculaire et aucun groupe fonctionnel autre qu'un groupe hydrosilyle aux extrémités ; ou un mélange dudit organopolysiloxane linéaire contenant un groupe hydrosilyle et d'un organopolysiloxane linéaire ayant au moins un groupe fonctionnel autre qu'un groupe hydrosilyle à l'extrémité et éventuellement ayant un groupe hydrosilyle à l'extrémité, le pourcentage du nombre d'atomes de silicium terminaux ayant le groupe fonctionnel autre qu'un groupe hydrosilyle étant inférieur à 5 %, en se basant sur le nombre total d'atomes de silicium terminaux de l'ensemble des organopolysiloxanes dans le composant (A-1) ; et
(A-2) un organopolysiloxane linéaire ayant un groupe alcénylsilyle aux deux extrémités de la chaîne moléculaire et aucun groupe fonctionnel autre qu'un groupe alcénylsilyle aux extrémités, ou un mélange dudit organopolysiloxane linéaire contenant un groupe alcénylsilyle et d'un organopolysiloxane linéaire ayant au moins un groupe fonctionnel autre qu'un groupe alcénylsilyle à l'extrémité et éventuellement un groupe alcénylsilyle à l'extrémité, le pourcentage du nombre d'atomes de silicium terminaux ayant le groupe fonctionnel autre qu'un groupe alcénylsilyle étant inférieur à 5 %, en se basant sur le nombre total d'atomes de silicium terminaux de l'ensemble des organopolysiloxanes dans le composant (A-2).

dans laquelle le rapport du nombre de groupes alcénylsilyle dans le composant (A-2) au nombre de groupes hydrosilyle dans le composant (A-1) est de 0,5 à 2 ;
(B) un tensioactif en une quantité de 0,1 à 12 parties en masse, pour 100 parties en masse du composant (A) ; et

(C) de l'eau en une quantité de 10 à 200 parties en masse, pour 100 parties en masse du composant (A).

2. Composition d'émulsion selon la revendication 1, dans laquelle des particules dispersées dans la composition d'émulsion ont une granulométrie moyenne en volume de 1 000 nm ou moins en tant que diamètre médian déterminé avec un analyseur de distribution granulométrique par diffraction/diffusion laser.

3. Composition d'émulsion selon la revendication 1 ou 2, dans laquelle une quantité d'octaméthylcyclotétrasiloxane incluse dans le composant (A-1) et le composant (A-2) est de 1 000 ppm en masse ou moins, en se basant sur la masse totale des composants (A-1) et (A-2).

4. Composition d'émulsion selon l'une quelconque des revendications 1 à 3, dans laquelle

(A-1) l'organopolysiloxane linéaire ayant un groupe hydrosilyle aux deux extrémités de la chaîne moléculaire et aucun groupe fonctionnel autre qu'un groupe hydrosilyle aux extrémités est représenté par la formule (1) suivante

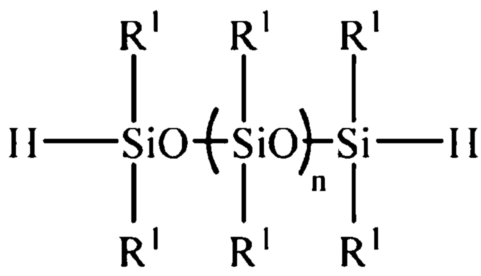

(1)

dans laquelle $R^1$ est, indépendamment les uns des autres, un groupe hydrocarboné monovalent, substitué ou non substitué ayant de 1 à 30 atomes de carbone, à l'exception d'un groupe alcényle, n est un nombre entier de 0 ou plus et est tel qu'une viscosité de l'organopolysiloxane linéaire à 25 °C est de 0,1 $mm^2/s$ ou plus et inférieure à 100 000 $mm^2/s$, en tant que valeur mesurée avec un viscosimètre rotationnel,
et
(A-2) l'organopolysiloxane linéaire ayant un groupe alcénylsilyle aux deux extrémités de la chaîne moléculaire et aucun groupe fonctionnel autre qu'un groupe alcénylsilyle aux extrémités est représenté par la formule (3) suivante

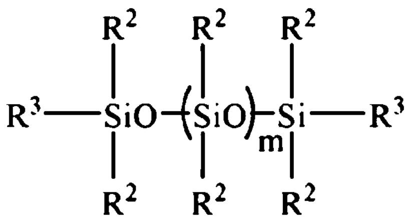

(3)

dans laquelle $R^2$ est, indépendamment les uns des autres, un groupe hydrocarboné monovalent, substitué ou non substitué ayant de 1 à 30 atomes de carbone, à l'exception d'un groupe alcényle, n est un nombre entier de 0 ou plus et tel qu'une viscosité de l'organopolysiloxane linéaire à 25 °C est de 0,1 $mm^2/s$ ou plus et inférieure à 100 000 $mm^2/s$, en tant que valeur mesurée avec un viscosimètre rotationnel.

5. Composition d'émulsion selon la revendication 4, dans laquelle

l'organopolysiloxane linéaire ayant au moins un groupe fonctionnel autre qu'un groupe hydrosilyle à l'extrémité est tel qu'au moins un des atomes d'hydrogène liés à l'atome de silicium terminal dans la formule (1) est substitué par un groupe fonctionnel choisi parmi un groupe hydroxyle, un groupe méthoxy et un groupe éthoxy, et l'organopolysiloxane linéaire ayant un groupe fonctionnel autre qu'un groupe alcényle à l'extrémité est tel que représenté par la formule (3) dans laquelle au moins un des $R^3$ terminaux est un groupe fonctionnel choisi parmi un groupe hydroxyle, un groupe méthoxy et un groupe éthoxy.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 342041 B
- JP 4113995 B
- JP 5382273 B
- JP 3927692 B
- WO 2016100840 A1
- US 3220972 A
- US 3159601 A
- US 3159662 A
- US 3775452 A